# EUROPEAN PATENT SPECIFICATION

(11) **EP 0 358 282 B1**
(45) Date of publication and mention of the grant of the patent: **13.10.1993**
(21) Application number: 89202849.9
(22) Date of filing: 08.11.1989
(51) Int. Cl.: C08J 9/02, C08L 75/04

(54) **Soft flexible polyurethane foams, a process for preparing the same, and a polyol composition useful in said process**
Weiche flexible Polyurethanschaumstoffe, Verfahren zu deren Herstellung sowie in diesem Verfahren verwendbare Polyolzusammensetzung
Mousses souples de polyuréthane flexible, leur procédé de préparation et composition de polyol utilisable dans ce procédé

(43) Date of publication of application: 14.03.1990
(73) Proprietor: SHELL INTERNATIONALE RESEARCH MAATSCHAPPIJ B.V., 2596 HR Den Haag (NL)
(72) Inventor: Aerts, René, B-1348 Ottignies-Louvain-la-Neuve (BE); Vandichel, Jean-Claude Noel Eliane, B-1348 Ottignies-Louvain-la-Neuve (BE); Batt, Alan Maria, B-1348 Ottignies-Louvain-la-Neuve (BE)

(56) References cited:
- EP-A- 0 250 969
- EP-A- 0 322 912
- DE-A- 2 242 133
- US-A- 3 377 296

## Description

The invention relates to soft flexible polyurethane foams, a process for preparing the same, and to a starting polyol composition useful in said process.

Soft flexible polyurethane foams have traditionally been made by reacting one or more organic polyisocyanates with one or more polyols having a molecular weight in the range of from 400 to 12,000, in the presence of a catalyst, a blowing agent, and if required, auxiliaries and/or additives (for example foam stabilisers, flame retardants, liquifiers, and cell-openers), using a halogenated hydrocarbon, such as a freon, as a blowing agent. Accordingly, soft to very soft foams could be prepared having nonetheless a (relatively) high to very high density, depending i.a. on (the molecular weight of) the polyol (blend) and polyisocyanate (blend) used.

Because halogenated hydrocarbons as blowing agents are believed to cause environmental and health problems (for instance through their role in the deterioration of the ozone layer), there is a growing need for a blowing agent that may (partly or even entirely) replace the halogenated hydrocarbon as blowing agent in the standard foam formulations (cf. the Protocol of Montreal on CFC's). Such substituting blowing agent should not cause these disadvantageous effects, nor should its application result in a sacrifice to the quality of the product, and/or the need to change the present process setup.

It is an object of the present invention to provide a process for manufacturing high quality soft flexible foams using less or no halogenated hydrocarbons as blowing agents. Accordingly, the present invention provides for a process for preparing a soft flexible polyurethane foam by reacting (a) one or more organic polyisocyanates with (b) one or more polyols having a molecular weight in the range of from 400 to 12,000, in the presence of (c) a catalyst, (d) a blowing agent, and (e) if required, auxiliaries and/or additives, wherein the blowing agent (d) comprises water in admixture with from 0.001 to 5 part by weight (pbw), per 100 pbw polyol (b), of one or more non-crosslinked, water soluble, organic polyelectrolytes having a molecular weight in the range of 1000 to 20,000,000, preferably in the range of from 1200 to 5,000,000, said polyelectrolyte having a counterion which is other than ammonium, calcium or magnesium. Preferably the blowing agent (d) comprises no halogenated hydrocarbon as blowing agent, or only in an acceptable minor amount.

It is a further object of the invention to provide soft flexible polyurethane foams that have a hardness (DIN 53577 in kPa) of less than 3.0 kPa, preferably less than 2.5 kPa, most preferably less than 2.25 kPa. It was surprisingly found, that the properties of the foams according to the invention are indistinguishable from that of foams prepared by the use of halogen containing blowing agents (i.e., they do not differ in hardness and density which is precisely the merit of the present invention). The present foams may only be distinguished by analysis, due to the presence of the non-crosslinked polyelectrolyte or its counterions (eg. gas chromatography in combination with mass spectroscopy, IR, NMR), and/or by optical inspection of the foam (for example of the cell dimensions, crystallinity, and cell packing arrangements).

The organic polyelectrolytes, i.e., organic polymers that ionize to form macro-ions upon dissolution into water or into other strong polar solvents, preferably used in the present invention are selected from macro-anion forming polyelectrolytes such as polyacrylates, and macro-cation forming electrolytes such as for instance poly(vinylbutylpyridinium bromide). More preferably, the polyelectrolyte is selected from the polyacrylate salts.

It is true that the use of crosslinked polyacrylic salt particles in foam formulations is for instance known from the Japanese patent applications Nos. 55 151 034A, 57 061 076A, and 59 004 613A. However, the herein disclosed particulate material functions as an water absorber/releasing agent, and is present as distinct particles in the final product. Accordingly, no teaching can be derived therefrom how to solve the heretofore mentioned technical problem.

On the other hand, in US patent specification No. 4 127 515 the use of polyacrylic salts is mentioned also, however, as a surfactant in the preparation of a sponge containing a readily releasable uniformly distributed wax composition. Thus, a water reactant is employed in the form of an aqueous slurry, dispersion or oil-in-water emulsion of a wax composition to which a surfactant (i.e., an additive acting at the wax-water surface) is added.

Finally, the use of high molecular weight, optionally neutralized, water insoluble, cross-linked polyacrylic acids is known in for instance formulations containing filler particles and/or fibres (cf. 4,127,515). The polymers are herein employed as suspending or thickening agents (eg. Carbopol 941, made by B.F. Goodrich Chemical Co., having a molecular weight of approximately 1,250,000). Such suspending or thickening agents serve two functions: they keep ingredients suspended; and they act as a lubricant when a foam formulation containing such agent is going through a mixing pump. It will be appreciated that these high molecular weight agents have been found to be incapable of yielding a soft flexible foam.

In contrast to the above, the present invention employs one or more polyelectrolytes, in particular polyacrylic salts, that are soluble in the starting composition, will be uniformly distributed throughout the final foam, and will result in a foam having a hardness comparable to those obtained by use of halogen containing blowing agents.

The amount of polyelectrolyte, e.g. polyacrylic salt, used depends on the molecular weight of the or each polyelectrolyte. Thus, when the molecular weight is in the range of from 1000 to 20,000,000, preferably 0.001 to 5 pbw per 100 pbw polyol is used when processing in a mould, and 0.005 to 5 pbw is used when processing in a slabstock process. It has been found that if less than either 0.001 or 0.005 pbw is used, the softening effect will not be noticeable, and if more than 5 pbw is used, the foam will normally be unstable during the polymerization (collapse) unless (excessive) use is made of auxiliaries.

Preferably, the polyelectrolyte, suitably polyacrylic salt, has a molecular weight in the range of from 1000 to 100,000, especially 1500 to 100,000, and is employed in an amount in the range of from 0.01 to 0.8 pbw. More preferably, the polyelectrolyte has a molecular weight in the range of from 1500 to 10,000, especially 2000 to 10,000, and is employed in an amount in the range of from 0.01 to 0.5 pbw, depending on the degree of hardness to be obtained for a given foam formulation.

The counterion is suitably selected from any tetra-substituted and/or non-protonic onium ion such as tetrabutylammonium or tetraethylphosphonium, or an alkali metal ion, such as, and more preferably a sodium or potassium ion. No advantage is found when using ammonium, calcium or magnesium a counterion.

The polyacrylic residue may be the residue of a homopolymer of an optionally substituted acrylic acid, or the residue of a copolymer of two or more optionally substituted acrylic acids. Substituted acrylic acids in that respect comprise C₁ to C₄ a-, or b-vinyl substituted acrylic acids, but also (alkylated) acrylic acids containing a (pseudo)halogen group. The preferred substituted acrylic acid is methacrylic acid. Accordingly, the preferred polyacrylic residue may be the residue of the homopolymer of either acrylic or methacrylic acid, or the copolymer of acrylic and methacrylic acid. The most preferred polyacrylic residue is the residue of the homopolymer of acrylic acid.

The polyacrylic residue may also be the residue of a polymer as defined above that has been partly esterified with an optionally substituted, aromatic, aliphatic or cycloaliphatic alcohol. Said polymer may be prepared by either copolymerizing an acrylic acid with an ester thereof, or by partly esterifying a polyacrylic acid. In the latter process, polyalcohols are less preferred due to the risk of undesired crosslinking of polymer chains.

Without wishing to be bound to a specific explanatory theory, it is believed that the organic polyelectrolyte inhibits the formation of rigid polyurea domains, thereby producing softer foams and allowing a reduction of halogenated hydrocarbon blowing agents of between 50 and 100%. These rigid domains are presumably formed by crystallisation, hydrogen bonding or otherwise of urea units ("-N(H)-C(O)-N(H)-") that are produced by employing water as sole blowing agent. Then, the following (intermediate) reaction(s) take(s) place: 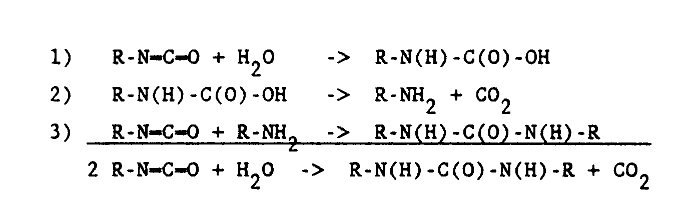
Polyisocyanates usually employed in the preparation of soft flexible polyurethane foams are also advantageously used in the present invention. Thus, organic polyisocyanates which may be employed include aromatic, aliphatic and cycloaliphatic polyisocyanates and combinations thereof. Representative of these types are the diisocyanates such as m-benzene diisocyanate, 2,4-toluene diisocyanate, 2,6-toluene diisocyanate, mixtures of 2,4- and 2,6-toluene diisocyanate, hexamethylene diisocyanate, tetramethylene diisocyanate, 1,4-cyclohexane diisocyanate, hexahydrotoluene diisocyanate (and isomers), 1,5-naphthene diisocyanate, 2,4-methoxyphenyl diisocyanate, 4,4'-diphenylmethane diisocyanate, 4,4'-biphenylene diisocyanate, 3,3'-dimethoxy-4,4'-biphenylene diisocyanate, 3,3'-dimethyl-4,4'-biphenylene diisocyanate, and 3,3'-dimethyl-4,4'-diphenylmethane diisocyanate; triisocyanates such as 4,4',4''-triphenylmethane triisocyanate, 1,6,11-undecane triisocyanate and 2,4,6-toluene triisocyanate; and the tetraisocyanates such as 4,4'-dimethyl-2,2',5,5'-diphenylmethane tetraisocyanate; and polymeric isocyanates such as polymethylene polyphenylene polyisocyanate.

Preferably a toluene diisocyanate, 4,4'-diphenylmethane diisocyanate and polymethylene polyphenylene polyisocyanate are used. More preferably toluene diisocyanate is used, most preferably in a 2,4-/2,6- isomer ratio ranging from 65/35 to 80/20.

Crude polyisocyanates, i.e., technical unpurified mixtures of polyisocyanates, may also be used in the compositions of the present invention, such as crude toluene diisocyanate obtained by the phosgenation of a mixture of toluene diamines or crude diphenylmethane diisocyanate obtained by the phosgenation of crude diphenylmethane diamine. Also preferred are the crude isocyanates as disclosed in U.S. patent No. 3 215 652.

In addition, corresponding polyisothiocyanates, polyisoselenocyanates and mixtures thereof as well as combinations thereof with a polyisocyanate may be employed.

Any suitable polyol having a molecular weight in the range of 400 to 12,000 may be used, such as hydroxy-terminated polyester polyols and/or hydroxy-terminated polyether polyols being well known in the art. Conventional polyols for flexible polyurethane foams are usually prepared by the reaction of a polyhydric alcohol with an alkylene oxide, usually ethylene oxide and/or propylene oxide. However, the effect of the present invention also may be detected in modified polyols, e.g., polymer polyols, polymers containing alkanolamines and (pre)polymers thereof, as well as (other) polyols having a high solids content, as for example referred to in European patent application 318 242.

According to a preferred embodiment of the present invention, the polyol (blend) and the polyacrylic salt (blend) are premixed, and the polyisocyanate(s) and additives are metered thereto during polymerization.

In order to form the polyurethane foam smoothly, a catalyst useful in preparing foams is employed in the usual manner. Suitable catalysts that may be used include: tertiary amines such as, for example triethylenediamine, N-methylmorpholine, N-ethylmorpholine, diethylethanolamine, N-cocomorpholine, 1-methyl-4-dimethylamino-ethylpiperazine, 3-methoxypropyldimethylamine, N,N,N'-trimethylisopropyl propylenediamine, 3-diethylaminopropyldiethylamine, and dimethylbenzylamine; tertiary phosphines such as trialkylphosphines, and dialkylbenzylphosphines; strong bases such as alkali and alkaline earth metal hydroxides, alkoxides, and phenoxides; acidic metal salts of strong acids such as ferric chloride, stannic chloride, stannous chloride, antimony trichloride, and bismuth nitrate and chloride; chelates of various metals such as those which can be obtained from acetylacetone, benzylacetone, trifluoroacetylacetone, ethyl acetoacetate, salicyclaldehyde, cyclopentanone-1-carboxylate, acetylacetoneimine, bisacetylacetonealkylenediamine, and salicyclaldehydeimine, with various metals such as Be, Mg, Zn, Cd, Pd, Ti, Zr, Sn, As, Bi, Cr, Mo, Mn, Fe, Co, and Ni; alcoholates and phenolates of various metals such as Ti(OR)₄, Sn(OR)₄, and Al(OR)₃, wherein R is alkyl or aryl, and the reaction products of alcoholates with carboxylic acids, beta-diketones, and 2-(N,N-dialkylamino)alkanols; salts of organic acids with a variety of metals such as alkali metals, alkaline earth metals, Al, Sn, Pb, Mn, Co, Ni, and Cu, including, for example, sodium acetate, stannous octoate, stannous oleate, lead octoate, metallic driers such as manganese and cobalt naphthenate; and organometallic derivatives of tetravalent tin, trivalent and pentavalent As, Sb, and Bi and metal carbonyls of iron and cobalt, as well as other organometallic compounds such as disclosed in U.S. patent No. 2 846 408.

It will be appreciated that also combinations of any of the heretofore mentioned polyurethane catalysts may be employed. Usually, the amount of catalyst employed varies in the range of from 0.01 to 5.0 pbw based on 100 pbw of the polyol. More often, the amount of catalyst used is from 0.2 to 2.0 pbw.

Foaming is carried out in the presence of water and the polyacrylic salt and, optionally, additional organic blowing agents if any, being substantially free of halogenated hydrocarbons that are undesired with reference to the environment.

The water is normally used in an amount of from 0.5 to 15 pbw, preferably 1.0 to 10 pbw, more preferably 2 to 5 pbw, based on 100 pbw polyol.

Auxiliaries/additives which regulate the cell size and the cell structure, for example, silicone oil such as dimethylpolysiloxanes, may also be added to the foaming mixture, as well as flame retardants.

Among the flame retardants which may be employed are: dicyanodiamide, cyanoamide, melamine, pentabromodiphenyl oxide, dibromopropanol, tris(β-chloropropyl)phosphate, 2,2-bis(bromoethyl)-1,3-propanediol, tetrakis(2-chloroethyl)ethylene diphosphate, ethylene diphosphate, tris(2,3-dibromopropyl)phosphate, tris(β-chloroethyl)phosphate, tris(1,2-dichloropropyl)phosphate, bis(2-chloroethyl)-2-chloroethylphosphonate, molybdenum trioxide, ammonium molybdate, ammonium polyphosphate, pentabromodiphenyloxide, tricresyl phosphate, hexabromocyclododecane and dibromoethyl-dibromocyclohexane. The concentrations of flame retardant compounds which may be employed range from 1 to 25 pbw per 100 pbw of polyol.

Fillers, dyes or plasticizers of known types may also be used. These and other auxiliaries are well known to those skilled in the art.

The process of the invention may preferably be employed either continuously in an open environment employing a conveyer belt, or batch-wise in a closed mould by in-situ foaming, i.e., using a slabstock or moulding process.

The invention is illustrated in the examples by a slabstock process, however, without restricting the scope of the invention to these embodiments.

The following examples illustrate the nature of the invention. All parts are by weight unless otherwise designated. In the examples below, following abbreviations are used.
- Caradol 48-2: a polyol, sold by Shell
- NaPa: sodium polyacrylate, Mw = 2000
- Fll: trichlorofluoromethane, sold by duPont Co.
- Sil (BF 2370): a silicon oil, sold by Th. Goldschmidt A.G.
- dabco (33LV): diazabicylooctane in solution, sold by Air Products.
- SnOct: stannous octoate, sold by Union Carbide.
- TDI: toluene diisocyanate, Caradate T80, sold by BSI.

All examples, unless indicated otherwise, were conducted by preparing a formulation by weighing all the components except for the isocyanate compound and thoroughly mixing. An appropriate amount of this formulation was then weighed into a plastic cup having a nominal capacity of 560 ml. An appropriate amount of isocyanate was then added within 3 seconds and mixed vigorously for 15 seconds. The mixture was poured in 2-3 seconds into a shoe box (30 x 20 x 15 cm³) and the foam was allowed to rise. The physical properties were determined after 48 hours.

The properties of the foams were measured as follows:
- Density (kg/m³): ISO 845
- Compression hardness or CLD (kPa): Din 53577 (i.e. ISO 3386-1)
- Elongation (%): ASTM D 3574

### Examples 1 to 6

Formulation A and D (examples 1 and 4) contained a halogenated hydrocarbon as blowing agent, formulations B and E (examples 2 and 5) contained only water as a blowing agent and formulations C and F (examples 3 and 6) contained a water/sodium polyacrylate as blowing agent. The results of examples 3 and 6 were as good as that of examples 1 and 4, and better than that of examples 2 and 5 as is evident from their compression hardness.

| | | | | | | |
|---|---|---|---|---|---|---|
| Formulations | A | B | C | D | E | F |
| Caradol | 100 | 100 | 100 | 100 | 100 | 100 |
| H₂O | 3.2 | 4.4 | 4.4 | 3.0 | 3.7 | 3.7 |
| NaPa | - | - | 0.15 | - | - | 0.10 |
| Fll | 11 | - | - | 6 | - | - |
| Sil | 1.2 | 1.2 | 1.2 | 0.9 | 1.0 | 1.0 |
| dabco | 0.09 | 0.05 | 0.05 | 0.12 | 0.06 | 0.06 |
| SnOct | 0.24 | 0.22 | 0.24 | 0.20 | 0.20 | 0.22 |

| | | | | | | |
|---|---|---|---|---|---|---|
| Example | 1 | 2 | 3 | 4 | 5 | 6 |
| Formulation | A | B | C | D | E | F |
| TDI (index) | 108 | 105 | 105 | 104 | 104 | 104 |
| Density (kg/m³) | 24.2 | 24.7 | 24.5 | 28.6 | 28.4 | 28.5 |
| CLD (kPa) | 2.1 | 3.4 | 2.1 | 2.3 | 3.5 | 2.3 |
| Elongation (%) | 190 | 250 | 160 | 180 | 270 | 180 |

### Examples 7 to 19

Three series of experiments were conducted, within each series the density was held constant. Within each series the hardness improved upon addition of sodium polyacrylate to a formulation containing solely water as blowing agent (examples 7, 11, and 15).

| | | | | |
|---|---|---|---|---|
| Formulations | G | H | I | J |
| Caradol | 100 | 100 | 100 | 100 |
| H₂O | 3.8 | 3.8 | 3.8 | 3.8 |
| NaPa | - | 0.05 | 0.10 | 0.15 |
| Sil | 1.2 | 1.2 | 1.2 | 1.2 |
| dabco | 0.08 | 0.08 | 0.08 | 0.08 |
| SnOct | 0.20 | 0.20 | 0.20 | 0.20 |

| | | | | |
|---|---|---|---|---|
| Example | 7 | 8 | 9 | 10 |
| Formulation | G | H | I | J |
| TDI (index) | 105 | 105 | 105 | 105 |
| Density (kg/m³) | 26.6 | 26.4 | 27.2 | 26.8 |
| CLD (kPa) | 3.0 | 2.6 | 2.4 | 1.9 |
| Elongation (%) | 270 | 175 | 160 | 180 |

| | | | | |
|---|---|---|---|---|
| Formulations | K | L | M | N |
| Caradol | 100 | 100 | 100 | 100 |
| H₂O | 2.8 | 2.8 | 2.8 | 2.8 |
| NaPa | - | 0.05 | 0.10 | 0.15 |
| Sil | 0.9 | 0.9 | 0.9 | 0.9 |
| dabco | 0.12 | 0.12 | 0.12 | 0.12 |
| SnOct | 0.20 | 0.20 | 0.20 | 0.22 |

| | | | | |
|---|---|---|---|---|
| Example | 11 | 12 | 13 | 14 |
| Formulation | K | L | M | N |
| TDI (index) | 105 | 105 | 105 | 105 |
| Density (kg/m³) | 34.3 | 33.8 | 33.3 | 33.5 |
| CLD (kPa) | 3.1 | 2.7 | 2.3 | 2.3 |
| Elongation (%) | 270 | 180 | 170 | 170 |

| | | | | | |
|---|---|---|---|---|---|
| Formulations | O | P | Q | R | S |
| Caradol | 100 | 100 | 100 | 100 | 100 |
| H₂O | 4.8 | 4.8 | 4.8 | 4.8 | 4.8 |
| NaPa | - | 0.05 | 0.10 | 0.15 | 0.20 |
| Sil | 1.3 | 1.3 | 1.3 | 1.3 | 1.3 |
| dabco | 0.05 | 0.05 | 0.05 | 0.05 | 0.05 |
| SnOct | 0.20 | 0.20 | 0.20 | 0.26 | 0.32 |

| | | | | | |
|---|---|---|---|---|---|
| Example | 15 | 16 | 17 | 18 | 19 |
| Formulation | O | P | Q | R | S |
| TDI (index) | 105 | 105 | 105 | 105 | 105 |
| Density (kg/m³) | 22.3 | 21.8 | 22.2 | 22.1 | 21.7 |
| CLD (kPa) | 2.9 | 2.65 | 2.3 | 2.2 | 2.0 |
| Elongation (%) | 230 | 170 | 160 | 180 | 200 |

### Comparative examples

Example 20 was prepared in accordance with the practice of the above examples, wherein, however, the sodium polyacrylate having a molecular weight of 2000 was replaced by 0.15, 0.4 or 1.0 pbw of a sodium polyacrylate having a Mw of 1,250,000 ( Carbopol 941, made by B.F. Goodrich Chemical Co.). The foam hardness of the formulations with high molecular weight sodium polyacrylate were identical or nearly identical with the hardness found for a formulation without softening agent (CLD >> 3.0 kPa), clearly proving the inadequacy of the high molecular weight polyacrylate.

In example 21 the sodium polyacrylate was replaced by ammonium polyacrylate. No foam could be produced, due to lack of gelation, even after 45 minutes in an oven at 80 °C.

Examples 23 to 26 were prepared by employing magnesium polyacrylate (MgPa) instead of sodium polyacrylate, as indicated below (example 22 is included as reference). Again, the foam produced did not show an improved hardness.

| | | | | | |
|---|---|---|---|---|---|
| Formulations | T | U | V | W | X |
| Caradol | 100 | 100 | 100 | 100 | 100 |
| H₂O | 3.8 | 3.2 | 3.2 | 2.2 | 2.2 |
| MgPa | - | 0.15 | 0.15 | 0.40 | 0.40 |
| Sil | 1.2 | 1.2 | 1.2 | 1.2 | 1.2 |
| dabco | 0.08 | 0.08 | 0.08 | 0.08 | 0.08 |
| SnOct | 0.20 | 0.22 | 0.22 | 0.22 | 0.22 |

| | | | | | |
|---|---|---|---|---|---|
| Example | 22 | 23 | 24 | 25 | 26 |
| Formulation | T | U | V | W | X |
| TDI (index) | 105 | 105 | 105 | 105 | 105 |
| Density (kg/m³) | 26.7 | 26.9 | 27.2 | 27.1 | 26.8 |
| CLD (kPa) | 3.0 | 3.0 | 3.1 | 3.0 | 2.9 |

### Examples 27 to 40

Example 28 to 40 were conducted with a sodium polyacrylates (sold by Allied Colloids) having a molecular weight of 30,000 (examples 28 to 30); 75,000 (examples 31 to 33); 250,000 (examples 34 to 36); and 2,500,000 (examples 37 to 40), in formulations containing 0.05 pbw additive (examples 28, 31, 34, and 37); 0.10 pbw additive (examples 29, 32, 35, and 38); 0.15 pbw additive (examples 30, 33, 36, and 39); and 0.20 pbw additive (example 40) as described below. Example 27 was added for comparison purposes. Although the high molecular weight sodium polyacrylate showed the claimed hardness reducing effect, it is appreciated that more sodium polyacrylate was needed to obtain the same effect as regard the lower molecular weight sodium polyacrylate.

| | | | | |
|---|---|---|---|---|
| Formulations | Y | Z | AA | BB |
| Caradol | 100 | 100 | 100 | 100 |
| H₂O | 4.4 | 4.4 | 4.4 | 4.4 |
| NaPa (30,000) | - | 0.05 | 0.10 | 0.15 |
| Sil | 1.1 | 1.1 | 1.1 | 1.1 |
| dabco | 0.05 | 0.085 | 0.085 | 0.05 |
| SnOct | 0.18 | 0.24 | 0.24 | 0.24 |

| | | | | |
|---|---|---|---|---|
| Example | 27 | 28 | 29 | 30 |
| Formulation | Y | Z | AA | BB |
| TDI (index) | 105 | 105 | 105 | 105 |
| Density (kg/m³) | 23.5 | 23.1 | 23.1 | 23.1 |
| CLD (kPa) | 3.0 | 2.5 | 2.2 | 2.0 |

| | | | | |
|---|---|---|---|---|
| Formulations | Y | CC | DD | EE |
| Caradol | 100 | 100 | 100 | 100 |
| H₂O | 4.4 | 4.4 | 4.4 | 4.4 |
| NaPa (75,000) | - | 0.05 | 0.10 | 0.15 |
| Sil | 1.1 | 1.1 | 1.1 | 1.1 |
| dabco | 0.05 | 0.05 | 0.05 | 0.05 |
| SnOct | 0.18 | 0.24 | 0.24 | 0.24 |

| | | | | |
|---|---|---|---|---|
| Example | 27 | 31 | 32 | 33 |
| Formulation | Y | CC | DD | EE |
| TDI (index) | 105 | 105 | 105 | 105 |
| Density (kg/m³) | 23.5 | 23.3 | 23.3 | 23.3 |
| CLD (kPa) | 3.0 | 2.6 | 2.2 | 2.0 |

| | | | | |
|---|---|---|---|---|
| Formulations | Y | FF | GG | HH |
| Caradol | 100 | 100 | 100 | 100 |
| H₂O | 4.4 | 4.4 | 4.4 | 4.4 |
| NaPa (250,000) | - | 0.05 | 0.10 | 0.15 |
| Sil | 1.1 | 1.1 | 1.1 | 1.1 |
| dabco | 0.05 | 0.05 | 0.05 | 0.05 |
| SnOct | 0.18 | 0.24 | 0.24 | 0.24 |

| | | | | |
|---|---|---|---|---|
| Example | 27 | 34 | 35 | 36 |
| Formulation | Y | FF | GG | HH |
| TDI (index) | 105 | 105 | 105 | 105 |
| Density (kg/m³) | 23.5 | 23.7 | 23.7 | 23.7 |
| CLD (kPa) | 3.0 | 2.6 | 2.3 | 2.2 |

| | | | | | |
|---|---|---|---|---|---|
| Formulations | Y | II | JJ | KK | LL |
| Caradol | 100 | 100 | 100 | 100 | 100 |
| H₂O | 4.4 | 4.4 | 4.4 | 4.4 | 4.4 |
| NaPa (2,500,000) | - | 0.05 | 0.10 | 0.15 | 0.20 |
| Sil | 1.1 | 1.1 | 1.1 | 1.1 | 1.1 |
| dabco | 0.05 | 0.05 | 0.05 | 0.05 | 0.05 |
| SnOct | 0.18 | 0.24 | 0.24 | 0.24 | 0.24 |

| | | | | | |
|---|---|---|---|---|---|
| Example | 27 | 37 | 38 | 39 | 40 |
| Formulation | Y | II | JJ | KK | LL |
| TDI (index) | 105 | 105 | 105 | 105 | 105 |
| Density (kg/m³) | 23.5 | 24.0 | 24.0 | 24.0 | 24.0 |
| CLD (kPa) | 3.0 | 2.6 | 2.4 | 2.3 | 2.1 |

## Claims (Claims for the following Contracting State(s): AT, BE, CH, DE, FR, GB, GR, IT, LI, LU, NL, SE)

1. A process for preparing a soft flexible polyurethane foam by reacting (a) one or more organic polyisocyanates with (b) one or more polyols having a molecular weight in the range of from 400 to 12,000, in the presence of (c) a catalyst, (d) a blowing agent, and (e) if required, auxiliaries and/or additives, wherein the blowing agent (d) comprises water in admixture with from 0.001 to 5 pbw, per 100 pbw polyol (b), of one or more non-crosslinked, water-soluble organic polyelectrolytes having a molecular weight in the range of 1000 to 20,000,000, said polyelectrolyte having a counterion other than ammonium, calcium or magnesium.

2. A process as claimed in claim 1, wherein the or each non-crosslinked polyelectrolyte has a molecular weight in the range of 1200 to 5,000,000

3. A process as claimed in claim 1, wherein the or each non-crosslinked polyelectrolyte has a molecular weight in the range of 1500 to 100,000, and wherein the amount of non-crosslinked polyelectrolyte, per 100 pbw polyol, is in the range of 0.01 to 0.8 pbw.

4. A process as claimed in claim 3, wherein the or each non-crosslinked polyelectrolyte has a molecular weight in the range of 2000 to 10,000, and wherein the amount of non-crosslinked polyelectrolyte, per 100 pbw polyol, is in the range of 0.01 to 0.5 pbw.

5. A process as claimed in any of claims 1 to 4, wherein the or each non-crosslinked polyelectrolyte is a salt of an alkali metal.

6. A process as claimed in any of claims 1 to 5, wherein the or each non-crosslinked polyelectrolyte is a polyacrylate.

7. A process as claimed in claim 6, wherein the or each non-crosslinked polyacrylate is a homopolymer salt of an optionally substituted acrylic acid, or a copolymer salt of two or more optionally substituted acrylic acids.

8. A process as claimed in claim 7, wherein the or each non-crosslinked polyacrylate is a homopolymer salt of either acrylic acid or methacrylic acid, or a copolymer salt of both acrylic acid and methacrylic acid.

9. A process as claimed in any of claims 1 to 8, wherein the or each organic polyisocyanate used is selected from 4,4'-diphenylmethane diisocyanate and toluene diisocyanate.

10. A process as claimed in any of claims 1 to 9, wherein the foam ingredients a) and b) are combined before preparation of the foam.

11. A process as claimed in any of claims 1 to 10, wherein the or each polyol is a polyether polyol.

12. A process as claimed in any of claims 1 to 11, wherein the process comprises a continuous production of foam (slabstock method) in an open environment employing a conveyor belt.

13. A process as claimed in any of claims 1 to 11, wherein the process comprises dispersing the foam ingredients in a mould, and producing the foam by in-situ foaming.

14. A soft flexible substantially water-blown polyurethane foam obtainable by a process as claimed in any of claims 1 to 13, which contains, in addition to the catalyst and any required auxiliaries and/or additives utilised in the preparation of the foam, one or more non-crosslinked, water-soluble organic polyelectrolytes as defined in claim 1, and which has a hardness of less than 3.0 kPa (DIN 53577).

15. A soft flexible polyurethane foam as claimed in claim 14, wherein the hardness is less than 2.5 kPa.

16. A premix composition useful in the preparation of polyurethanes as claimed in claim 10, comprising one or a blend of polyols having a molecular weight in the range of 400 to 12,000, one or a blend of non-crosslinked polyacrylic acid salts having a molecular weight in the range of 1000 to 20,000,000, and optionally water.

17. A premix composition as claimed in claim 16, wherein the or each non-crosslinked polyacrylic acid salt has a molecular weight in the range of 1200 to 5,000,000.

## Claims (Claims for the following Contracting State(s): ES)

1. A process for preparing a soft flexible polyurethane foam by reacting (a) one or more organic polyisocyanates with (b) one or more polyols having a molecular weight in the range of from 400 to 12,000, in the presence of (c) a catalyst, (d) a blowing agent, and (e) if required, auxiliaries and/or additives, wherein the blowing agent (d) comprises water in admixture with from 0.001 to 5 pbw, per 100 pbw polyol (b), of one or more non-crosslinked, water-soluble organic polyelectrolytes having a molecular weight in the range of 1000 to 20,000,000, said polyelectrolyte having a counterion other than ammonium, calcium or magnesium.

2. A process as claimed in claim 1, wherein the or each non-crosslinked polyelectrolyte has a molecular weight in the range of 1200 to 5,000,000

3. A process as claimed in claim 1, wherein the or each non-crosslinked polyelectrolyte has a molecular weight in the range of 1500 to 100,000, and wherein the amount of non-crosslinked polyelectrolyte, per 100 pbw polyol, is in the range of 0.01 to 0.8 pbw.

4. A process as claimed in claim 3, wherein the or each non-crosslinked polyelectrolyte has a molecular weight in the range of 2000 to 10,000, and wherein the amount of non-crosslinked polyelectrolyte, per 100 pbw polyol, is in the range of 0.01 to 0.5 pbw.

5. A process as claimed in any of claims 1 to 4, wherein the or each non-crosslinked polyelectrolyte is a salt of an alkali metal.

6. A process as claimed in any of claims 1 to 5, wherein the or each non-crosslinked polyelectrolyte is a polyacrylate.

7. A process as claimed in claim 6, wherein the or each non-crosslinked polyacrylate is a homopolymer salt of an optionally substituted acrylic acid, or a copolymer salt of two or more optionally substituted acrylic acids.

8. A process as claimed in claim 7, wherein the or each non-crosslinked polyacrylate is a homopolymer salt of either acrylic acid or methacrylic acid, or a copolymer salt of both acrylic acid and methacrylic acid.

9. A process as claimed in any of claims 1 to 8, wherein the or each organic polyisocyanate used is selected from 4,4'-diphenylmethane diisocyanate and toluene diisocyanate.

10. A process as claimed in any of claims 1 to 9, wherein the foam ingredients a) and b) are combined before preparation of the foam.

11. A process as claimed in any of claims 1 to 10, wherein the or each polyol is a polyether polyol.

12. A process as claimed in any of claims 1 to 11, wherein the process comprises a continuous production of foam (slabstock method) in an open environment employing a conveyor belt.

13. A process as claimed in any of claims 1 to 11, wherein the process comprises dispersing the foam ingredients in a mould, and producing the foam by in-situ foaming.

14. A process for the preparation of a premix composition useful in the preparation of polyurethanes as claimed in claim 10, comprising mixing one or a blend of polyols having a molecular weight in the range of 400 to 12,000, one or a blend of non-crosslinked polyacrylic acid salts having a molecular weight in the range of 1000 to 20,000,000, and optionally water.

## Patentansprüche (Patentansprüche für folgende(n) Vertragsstaat(en): AT, BE, CH, DE, FR, GB, GR, IT, LI, LU, NL, SE)

1. Verfahren zur Herstellung eines weichelastischen Polyurethanschaumstoffes durch Umsetzen (a) eines oder mehrerer organischer Polyisocyanate mit (b) einem oder mehreren Polyolen mit einem Molekulargewicht im Bereich von 400 bis 12.000 in Anwesenheit von (c) einem Katalysator, (d) einem Treibmittel und (e) erforderlichenfalls Hilfsstoffen und/oder Additiven, worin das Treibmittel (d) Wasser im Gemisch mit 0,001 bis 5 Gewichtsteilen je 100 Gewichtsteile Polyol (b) an einem oder mehreren unvernetzten, wasserlöslichen organischen Polyelektrolyten mit einem Molekulargewicht im Bereich von 1.000 bis 20,000.000 umfaßt, welcher Polyelektrolyt ein anderes Gegenion als Ammonium, Calcium oder Magnesium aufweist.

2. Verfahren nach Anspruch 1, worin der oder jeder unvernetzte Polyelektrolyt ein Molekulargewicht im Bereich von 1.200 bis 5,000.000 aufweist.

3. Verfahren nach Anspruch 1, worin der oder jeder unvernetzte Polyelektrolyt ein Molekulargewicht im Bereich von 1.500 bis 100.000 aufweist und worin die Menge an unvernetztem Polyelektrolyt je 100 Gewichtsteile Polyol im Bereich von 0,01 bis 0,8 Gewichtsteilen liegt.

4. Verfahren nach Anspruch 3, worin der oder jeder unvernetzte Polyelektrolyt ein Molekulargewicht im Bereich von 2.000 bis 10.000 aufweist und worin die Menge an unvernetztem Polyelektrolyt je 100 Gewichtsteile Polyol im Bereich von 0,01 bis 0,5 Gewichtsteilen liegt.

5. Verfahren nach einem der Ansprüche 1 bis 4, worin der oder jeder unvernetzte Polyelektrolyt ein Salz eines Alkalimetalles ist.

6. Verfahren nach einem der Ansprüche 1 bis 5, worin der oder jeder unvernetzte Polyelektrolyt ein Polyacrylat ist.

7. Verfahren nach Anspruch 6, worin das oder jedes unvernetzte Polyacrylat ein Homopolymersalz einer gegebenenfalls substituierten Acrylsäure oder ein Copolymersalz von zwei oder mehreren gegebenenfalls substituierten Acrylsäuren ist.

8. Verfahren nach Anspruch 7, worin das oder jedes unvernetzte Polyacrylat ein Homopolymersalz von entweder Acrylsäure oder Methacrylsäure oder ein Copolymersalz von sowohl Acrylsäure als auch Methacrylsäure ist.

9. Verfahren nach einem der Ansprüche 1 bis 8, worin das oder jedes verwendete organische Polyisocyanat unter 4,4'-Diphenylmethandiisocyanat und Toluoldiisocyanat ausgewählt ist.

10. Verfahren nach einem der Ansprüche 1 bis 9, worin die Schaumstoffkomponenten (a) und (b) vor der Herstellung des Schaumstoffes vereinigt werden.

11. Verfahren nach einem der Ansprüche 1 bis 10, worin das oder jedes Polyol ein Polyetherpolyol ist.

12. Verfahren nach einem der Ansprüche 1 bis 11, worin das Verfahren eine kontinuierliche Schaumstoffbildung (Blockware-Methode) in einer offenen Umgebung unter Anwendung eines Förderbandes umfaßt.

13. Verfahren nach einem der Ansprüche 1 bis 11, worin das Verfahren ein Dispergieren der Schaumstoffkomponenten in einer Form und das Ausbilden des Schaumstoffes durch insitu-Verschäumen umfaßt.

14. Weichelastischer, im wesentlichen mit Wasser getriebener Polyurethanschaumstoff, erhältlich nach einem Verfahren wie in einem der Ansprüche 1 bis 13 beansprucht, der zusätzlich zu dem Katalysator und etwaigen, in der Herstellung des Schaumstoffes verwendeten erforderlichen Hilfsstoffen und/oder Additiven einen oder mehrere unvernetzte, wasserlösliche organische Polyelektrolyte, wie in Anspruch 1 definiert, enthält und der eine Härte von weniger als 3,0 kPa (DIN 53577) aufweist.

15. Weichelastischer Polyurethanschaumstoff nach Anspruch 14, worin die Härte weniger als 2,5 kPa beträgt.

16. Premix-Zusammensetzung, die in der Herstellung von Polyurethanen, wie in Anspruch 10 beansprucht, nützlich ist, umfassend ein Polyol oder ein Gemisch von Polyolen mit einem Molekulargewicht im Bereich von 400 bis 12.000, ein unvernetztes Polyacrylsäuresalz oder ein Gemisch von unvernetzten Polyacrylsäuresalzen mit einem Molekulargewicht im Bereich von 1.000 bis 20,000.000 und gegebenenfalls Wasser.

17. Premix-Zusammensetzung nach Anspruch 16, worin das oder jedes unvernetzte Polyacrylsäuresalz ein Molekulargewicht im Bereich von 1.200 bis 5,000.000 aufweist.

## Patentansprüche (Patentansprüche für folgende(n) Vertragsstaat(en): ES)

1. Verfahren zur Herstellung eines weichelastischen Polyurethanschaumstoffes durch Umsetzen (a) eines oder mehrerer organischer Polyisocyanate mit (b) einem oder mehreren Polyolen mit einem Molekulargewicht im Bereich von 400 bis 12.000 in Anwesenheit von (c) einem Katalysator, (d) einem Treibmittel und (e) erforderlichenfalls Hilfsstoffen und/oder Additiven, worin das Treibmittel (d) Wasser im Gemisch mit 0,001 bis 5 Gewichtsteilen je 100 Gewichtsteile Polyol (b) an einem oder mehreren unvernetzten, wasserlöslichen organischen Polyelektrolyten mit einem Molekulargewicht im Bereich von 1.000 bis 20,000.000 umfaßt, welcher Polyelektrolyt ein anderes Gegenion als Ammonium, Calcium oder Magnesium aufweist.

2. Verfahren nach Anspruch 1, worin der oder jeder unvernetzte Polyelektrolyt ein Molekulargewicht im Bereich von 1.200 bis 5,000.000 aufweist.

3. Verfahren nach Anspruch 1, worin der oder jeder unvernetzte Polyelektrolyt ein Molekulargewicht im Bereich von 1.500 bis 100.000 aufweist und worin die Menge an unvernetztem Polyelektrolyt je 100 Gewichtsteile Polyol im Bereich von 0,01 bis 0,8 Gewichtsteilen liegt.

4. Verfahren nach Anspruch 3, worin der oder jeder unvernetzte Polyelektrolyt ein Molekulargewicht im Bereich von 2.000 bis 10.000 aufweist und worin die Menge an unvernetztem Polyelektrolyt je 100 Gewichtsteile Polyol im Bereich von 0,01 bis 0,5 Gewichtsteilen liegt.

5. Verfahren nach einem der Ansprüche 1 bis 4, worin der oder jeder unvernetzte Polyelektrolyt ein Salz eines Alkalimetalles ist.

6. Verfahren nach einem der Ansprüche 1 bis 5, worin der oder jeder unvernetzte Polyelektrolyt ein Polyacrylat ist.

7. Verfahren nach Anspruch 6, worin das oder jedes unvernetzte Polyacrylat ein Homopolymersalz einer gegebenenfalls substituierten Acrylsäure oder ein Copolymersalz von zwei oder mehreren gegebenenfalls substituierten Acrylsäuren ist.

8. Verfahren nach Anspruch 7, worin das oder jedes unvernetzte Polyacrylat ein Homopolymersalz von entweder Acrylsäure oder Methacrylsäure oder ein Copolymersalz von sowohl Acrylsäure als auch Methacrylsäure ist.

9. Verfahren nach einem der Ansprüche 1 bis 8, worin das oder jedes verwendete organische Polyisocyanat unter 4,4'-Diphenylmethandiisocyanat und Toluoldiisocyanat ausgewählt ist.

10. Verfahren nach einem der Ansprüche 1 bis 9, worin die Schaumstoffkomponenten (a) und (b) vor der Herstellung des Schaumstoffes vereinigt werden.

11. Verfahren nach einem der Ansprüche 1 bis 10, worin das oder jedes Polyol ein Polyetherpolyol ist.

12. Verfahren nach einem der Ansprüche 1 bis 11, worin das Verfahren eine kontinuierliche Schaumstoffbildung (Blockware-Methode) in einer offenen Umgebung unter Anwendung eines Förderbandes umfaßt.

13. Verfahren nach einem der Ansprüche 1 bis 11, worin das Verfahren ein Dispergieren der Schaumstoffkomponenten in einer Form und das Ausbilden des Schaumstoffes durch insitu-Verschäumen umfaßt.

14. Verfahren zur Herstellung einer Premix-Zusammensetzung, die in der Herstellung von Polyurethanen, wie in Anspruch 10 beansprucht, nützlich ist, umfassend das Vermischen eines Polyols oder eines Gemisches von Polyolen mit einem Molekulargewicht im Bereich von 400 bis 12.000, eines unvernetzten Polyacrylsäuresalzes oder eines Gemisches von unvernetzten Polyacrylsäuresalzen mit einem Molekulargewicht im Bereich von 1.000 bis 20,000.000 und gegebenenfalls von Wasser.

## Revendications (Revendications pour l'(les) Etat(s) contractant(s) suivant(s): AT, BE, CH, DE, FR, GB, GR, IT, LI, LU, NL, SE)

1. Un procédé pour la préparation d'une mousse souple de polyuréthane flexible en faisant réagir (a) un ou plusieurs polyisocyanates organiques avec (b) un ou plusieurs polyols ayant un poids moléculaire compris entre 400 et 12 000, en présence de (c) un catalyseur, (d) un agent gonflant et (e) si nécessaire des adjuvants et/ou des additifs, où l'agent gonflant (d) comprend de l'eau en mélange avec 0,001 à 5 parties en poids, pour 100 parties en poids de polyol (b), d'un ou plusieurs polyélectrolytes organiques non réticulés, solubles dans l'eau, ayant un poids moléculaire compris entre 1000 et 20 000 000, ces polyélectrolytes ayant un ion opposé autre que d'ammonium, de calcium ou de magnésium.

2. Un procédé selon la revendication 1, dans lequel le ou chaque polyélectrolyte non réticulé a un poids moléculaire compris entre 1200 et 5 000 000.

3. Un procédé selon la revendication 1, dans lequel le ou chaque polyélectrolyte non réticulé a un poids moléculaire compris entre 1500 et 100 000 et la quantité de polyélectrolyte non réticulé, pour 100 parties en poids de polyol, est comprise entre 0,01 et 0,8 partie en poids.

4. Un procédé selon la revendication 3, dans lequel le ou chaque polyélectrolyte non réticulé a un poids moléculaire compris entre 2000 et 10 000 et la quantité de polyélectrolyte non réticulé, pour 100 parties en poids de polyol, est comprise entre 0,01 et 0,5 partie en poids.

5. Un procédé selon l'une quelconque des revendications 1 à 4, dans lequel le ou chaque polyélectrolyte non réticulé est un sel d'un métal alcalin.

6. Un procédé selon l'une quelconque des revendications 1 à 5, dans lequel le ou chaque polyélectrolyte non réticulé est un polyacrylate.

7. Un procédé selon la revendication 6, dans lequel le ou chaque polyacrylate non réticulé est un sel homopolymère d'un acide acrylique éventuellement substitué ou un sel copolymère de deux acides acryliques ou plus éventuellement substitués.

8. Un procédé selon la revendication 7, dans lequel le ou chaque polyacrylate non réticulé est un sel homopolymère d'acide acrylique ou d'acide méthacrylique ou un sel copolymère à la fois d'acide acrylique et d'acide méthacrylique.

9. Un procédé selon l'une quelconque des revendications 1 à 8, dans lequel le ou chaque polyisocyanate organique utilisé est choisi parmi le 4,4'-diphénylméthane diisocyanate et le toluène diisocyanate.

10. Un procédé selon l'une quelconque des revendications 1 à 9, dans lequel les ingrédients (a) et (b) de la mousse sont combinés avant préparation de la mousse.

11. Un procédé selon l'une quelconque des revendications 1 à 10, dans lequel le ou chaque polyol est un polyéther polyol.

12. Un procédé selon l'une quelconque des revendications 1 à 11, dans lequel le procédé comprend une production continue de mousse (méthode de la plaque) dans un environnement ouvert en utilisant une courroie transporteuse.

13. Un procédé selon l'une quelconque des revendications 1 à 11, dans lequel le procédé comprend la dispersion des ingrédients de la mousse dans un moule et la production de la mousse par formation de mousse in situ.

14. Une mousse souple de polyuréthane flexible substantiellement gonflée par l'eau pouvant être obtenue par un procédé selon l'une quelconque des revendications 1 à 13, qui contient, en plus du catalyseur et de tous adjuvants et/ou additifs voulus utilisés dans la préparation de la mousse, un ou plusieurs polyélectrolytes organiques non réticulés, solubles dans l'eau, tels que définis dans la revendication 1, et qui a une dureté de moins de 3,0 kPa (DIN 53577).

15. Une mousse souple de polyuréthane flexible selon la revendication 14, dont la dureté est inférieure à 2,5 kPa.

16. Une composition prémélangée utile dans la préparation de polyuréthanes selon la revendication 10, comprenant un polyol ou un mélange de polyols ayant un poids moléculaire compris entre 400 et 12 000, un sel ou un mélange de sels d'acides polyacryliques non réticulés ayant un poids moléculaire compris entre 1000 et 20 000 000, et éventuellement de l'eau.

17. Une composition prémélangée selon la revendication 16, dans laquelle chaque sel d'acide polyacrylique non réticulé a un poids moléculaire compris entre 1200 et 5 000 000.

## Revendications (Revendications pour l'(les) Etat(s) contractant(s) suivant(s): ES)

1. Un procédé pour la préparation d'une mousse souple de polyuréthane flexible en faisant réagir (a) un ou plusieurs polyisocyanates organiques avec (b) un ou plusieurs polyols ayant un poids moléculalre compris entre 400 et 12 000, en présence de (c) un catalyseur, (d) un agent gonflant et (e) si nécessaire des adjuvants et/ou des additifs, où l'agent gonflant (d) comprend de l'eau en mélange avec 0,001 à 5 parties en poids, pour 100 parties en poids de polyol (b), d'un ou plusieurs polyélectrolytes organiques non réticulés, solubles dans l'eau, ayant un poids moléculaire compris entre 1000 et 20 000 000, ces polyélectrolytes ayant un ion opposé autre que d'ammonium, de calcium ou de magnésium.

2. Un procédé selon la revendication 1, dans lequel le ou chaque polyélectrolyte non réticulé a un poids moléculaire compris entre 1200 et 5 000 000.

3. Un procédé selon la revendication 1, dans lequel le ou chaque polyélectrolyte non réticulé a un poids moléculaire compris entre 1500 et 100 000 et la quantité de polyélectrolyte non réticulé, pour 100 parties en poids de polyol, est comprise entre 0,01 et 0,8 partie en poids.

4. Un procédé selon la revendication 3, dans lequel le ou chaque polyélectrolyte non réticulé a un poids moléculaire compris entre 2000 et 10 000 et la quantité de polyélectrolyte non réticulé, pour 100 parties en poids de polyol, est comprise entre 0,01 et 0,5 partie en poids.

5. Un procédé selon l'une quelconque des revendications 1 à 4, dans lequel, le ou chaque polyélectrolyte non réticulé est un sel d'un métal alcalin.

6. Un procédé selon l'une quelconque des revendications 1 à 5, dans lequel le ou chaque polyélectrolyte non réticulé est un polyacrylate.

7. Un procédé selon la revendication 6, dans lequel le ou chaque polyacrylate non réticulé est un sel homopolymère d'un acide acrylique éventuellement substitué ou un sel copolymère de deux acides acryliques ou plus éventuellement substitués.

8. Un procédé selon la revendication 7, dans lequel le ou chaque polyacrylate non réticulé est un sel homopolymère d'acide acrylique ou d'acide méthacrylique ou un sel copolymère à la fois d'acide acrylique et d'acide méthacrylique.

9. Un procédé selon l'une quelconque des revendications 1 à 8, dans lequel le ou chaque polyisocyanate organique utilisé est choisi parmi le 4,4'-diphénylméthane diisocyanate et le toluène diisocyanate.

10. Un procédé selon l'une quelconque des revendications 1 à 9, dans lequel les ingrédients (a) et (b) de la mousse sont combinés avant préparation de la mousse.

11. Un procédé selon l'une quelconque des revendications 1 à 10, dans lequel le ou chaque polyol est un polyéther polyol.

12. Un procédé selon l'une quelconque des revendications 1 à 11, dans lequel le procédé comprend une production continue de mousse (méthode de la plaque) dans un environnement ouvert en utilisant une courroie transporteuse.

13. Un procédé selon l'une quelconque des revendications 1 à 11, dans lequel le procédé comprend la dispersion des ingrédients de la mousse dans un moule et la production de la mousse par formation de mousse in situ.

14. Un procédé pour la préparation d'une composition de prépolymère utile pour l'obtention de polyuréthane selon la revendication 10, comprenant le mélange d'un ou plusieurs polyols ayant un poids moléculaire compris entre 400 et 12 000, d'un ou plusieurs sels d'acides polyacryliques non réticulés ayant un poids moléculaire compris entre 1 000 et 20 000 000 et éventuellement d'eau.
